# EUROPÄISCHE PATENTSCHRIFT

(11) **EP 1 637 504 B1**
(45) Veröffentlichungstag und Bekanntmachung des Hinweises auf die Patenterteilung: **01.04.2009**
(21) Anmeldenummer: 05018978.6
(22) Anmeldetag: 01.09.2005
(51) Int. Cl.: C02F 1/02

(54) **Einrichtung und Verfahren zur Erwärmung und zur thermischen Behandlung von Trinkwasser**
Device and method for heating and for thermal treatment of drinking water
Dispositif et procédé de chauffage et pour le traitement thermique de l' eau potable

(30) Priorität: 15.09.2004 DE 102004045059
(43) Veröffentlichungstag der Anmeldung: 22.03.2006
(73) Patentinhaber: Vertrieb und Grosshandel von Heizungs-, Sanitär- und Elektroerzeugnissen, 13055 Berlin (DE)
(72) Erfinder: Schramm, Bruno, 15537 Grünheide (DE); Lang, Jürgen, 12557 Berlin (DE)
(74) Vertreter: Burghardt, Dieter

(56) Entgegenhaltungen:
- EP-A- 0 598 652
- WO-A-02/11773
- WO-A-90/02707
- WO-A-95/29127
- DE-A1- 3 840 516
- DE-A1- 4 403 631
- DE-A1- 19 745 200
- DE-A1- 19 818 630

## Beschreibung

Die Erfindung betrifft eine Einrichtung und ein Verfahren zur Erwärmung und zur thermischen Behandlung von Trinkwasser aus öffentlichen Versorgungsnetzen innerhalb einer Wärmeversorgungsanlage-.

Trinkwasser aus den öffentlichen Netzen, das den mikrobiologischen Bestimmungen der Trinkwässerverordnung entspricht, enthält trotzdem eine geringe Konzentration von Keimen. Hierunter können sich auch Legionellen befinden, da sie ein Bestandteil der Mikroflora des Trinkwassers sind.

Diese Legionellen erfahren bei einer Temperaturerhöhung des Trinkwassers zwischen plus 30° und plus 50° C eine optimale Vermehrung. Oberhalb von 55° C werden die Legionellen wieder abgetötet.

Legionellen können die sogenannte Legionärskrankheit, worunter man eine schwere Lungenentzündung versteht, auslösen. Die durch Legionellen hervorgerufenen Erkrankungen können bis zu Todesfällen führen.

In wasserführenden technischen Systemen, insbesondere von Warmwasseranlagen einschließlich Einrichtung zur Warmwasserbereitung, kann jederzeit eine Legionellenvermehrung eintreten. Zur Krankheitsauslösung kommt es allerdings nur dann, wenn der Erreger mit Luft in einem sogenannten Luftwassergemisch (Aerosol) eingeatmet wird. Das ist vorwiegend dann der Fall, wenn in Duschanlagen mit Legionellen befallenes, erwärmtes Trinkwasser versprüht wird.

In den bekannten Einrichtungen zur Bereitstellung von erwärmtem Trinkwasser kann es in den Anlagen, in denen erwärmtes Trinkwasser gespeichert wird und die Aufheizung durch innere Heizflächen der Speichereinrichtungen erfolgt, zu einer vermehrten Legionellenausbildung kommen. In diesen Speicherwarmwassererwärmungseinrichtungen wird das erwärmte Trinkwasser auf einer Temperatur von ca. 40° C bis 50° C gehalten, wobei angestrebt wird, daß das Trinkwasser deutlich unterhalb der Temperaturgrenze für das Absondern von Kalkbestandteilen liegt. Außerdem werden diese Speicherwarmwassererhitzer regelungstechnisch im Zweipunktsystem gefahren, d. h., die Beheizung wird bei einer oberen Temperaturgrenze abgeschaltet und bei einer absinkenden Wassertemperatur unter einen Minimalwert wieder zugeschaltet. Dadurch tritt eine besonders, kräftige Vermehrung, der Legionellen ein.

Die Gefahr der Legionellenvermehrung bei der Erwärmung von Trinkwasser kann deutlich gesenkt werden, wenn das Trinkwasser in sogenannten Durchlauferhitzern auf die Entnahme-temperatur gebracht wird. Allerdings kann auch in diesen Anlagen eine Legiönellenvermehrung nicht ganz ausgeschlossen werden, insbesondere in Großanlagen, da die gebräuchliche Erwärmung in Vermeidung einer Verbrühungsgefahr deutlich unter 60° C gehalten wird, damit auch keine Kalkaussonderung eintritt: Der Ausfall von Kalk aus dem Trinkwasser bewirkt bekanntlich eine Reduzierung der Wärmeleistung von Wärmeaustauschern wegen der Verkrustung der wasserführenden Leitung an den inneren Oberflächen.

Grundsätzlich ist eine Vermehrung der Legionellen oberhalb einer Temperatur von 55° C nicht mehr zu erwarten. Diese Temperatur von 55° C schließt jedoch nicht eine spontane und gesicherte Abtötung der bereits vermehrten Legionellen im erwärmten Trinkwasser ein. So wurde nachgewiesen, daß bei einer Wassertemperatur von 55° C eine Abtötung erst nach 180 bis 240 Minuten registriert werden konnte. Die Zeitdauer der Abtötung sinkt, mit ansteigender Temperatur und die Abtötungszeit beträgt bei plus 70° C Wassertemperatur ca. 4 bis 6 Minuten.

Bei einer Wassertemperatur von 35° C bis 40° C wird eine äußerst brisante Vermehrung von Legionellen begünstigt. Dieser Temperaturbereich ist häufig in Brauchwasser-Verteilungsleitungen, Zirkulationsleitungen, in Brauseköpfen etc. anzutreffen.

Dieser Erkenntnis folgend, sind Einrichtungen bekannt geworden, in denen eine Erwärmung des Trinkwassers bis oberhalb von 55° C vorgenommen wird, um eine thermische Desinfektion zu erreichen.

Auch weitere thermische Desinfektionen beruhen auf einer Anhebung der Ablauftemperaturen, auf 63° C bis 70° C. Alle diese Brauchwasser-Erwärmungsanlagen sowie die mit ihnen durchgeführten thermischen Desinfektionen erfordern einen erheblichen Mehrbedarf an Energie wegen der auftretenden Zirkulations- und Ausströmungsverluste. Ferner sind sie mit einer erhöhten Korrosionsgefahr, einer vergrößerten Härteausfällung in der Brauchwasser-Verteilungsleitung, einem Verbrühungsrisiko sowie einer vermehrten Wartung für Armaturen und Anlagenteile behaftet. Darüber hinaus berücksichtigen diese Vorschläge nicht die unabdingbaren Forderungen aus dem Energie-Einsparungsgesetz sowie die Notwendigkeiten auch der zukünftig verstärkten Nutzung von Wärme aus Wärmerückgewinnung, alternativen Energien sowie Wärmepumpentechnologien.

In Fig. 2 der GB-OS 20 99 559 ist eine Anlage der eingangs genannten Gattung offenbart, mit welcher der Inhalt des Brauchwasser-Speichers auf eine relativ hohe Desinfektionstemperatur von 60° C bis 65° C erhitzt wird. Dieser Temperaturbereich ist weder energiewirtschaftlich, noch lassen sich damit Härteausfällungen in der Brauchwasser-Verteilungsleitung, noch ein Verbrühungsrisiko, noch eine vermehrte Wartung für Armaturen und Anlagenteile vermeiden. Zwar wird die bei dieser bekannten Anlage durch die Kaltwasser-Zuleitung in den Wärmeübertrager eintretende Kaltwassermenge vollständig erfaßt, nicht jedoch die aus dem Brauchwasser-Speicher ausfließende Heißwassermenge, von der eine Teilmenge über eine nicht bezeichnete Abzweigleitung direkt zur Brauchwasser-Verteilungsleitung mit den Zapfstellen und über eine weitere Abzweigleitung zum Kühler strömt. Dadurch kann kein ausreichender Verbrühüngsschutz gewährleistet werden.

Aus der DE-OS 35 10 017 ist ein mit Naphthalin zu füllender Wärmespeicher bekannt geworden. Da die Schmelzwärme des Naphthalins bei ca. 150 kJ/kg und sein Schmelzpunkt bei lediglich 80° C liegen, soll mit diesem Wärmespeicher die Speicherwärmemenge im Verhältnis zu Wasser ausgenutzt und damit die Speichergröße auf ein möglichst kleines Volumen begrenzt werden.

Neben den vorgenannten Brauchwasser-Erwärmungsanlagen mit thermischer Desinfektion sind auch solche mit chemischer (Chlorierung und Ozonierung) und physikalischer (UV-Strahlung) Desinfektion bekannt. Nur beispielsweise wird auf den Aufsatz von F.H. Frimmel "Internationale Tagung über Oxydationsverfahren in der Trinkwasseraufbereitung" in gwf/Wasser/Abwasser 1979, Heft 2, Seiten 76 bis 79 verwiesen.

Zur chemischen Desinfektion wurde beispielsweise die Kaltwasserzuführung zu dem Wassererwärmer mit einer umschaltbaren Umgehungsleitung mit einem Anschluß für zwei Dosierpumpen geschaffen. Dosiert wird mit Natriumhypochlorit und Salzsäure zur pH-Regulierung. Während der chemischen Desinfektion werden alle Warmwasserzapfstellen auf einen Auslauf einer bestimmten Auslaufmenge pro Minute einreguliert, die Chlorgehalte trimetisch mit einem Indikator und die pH-Werte elektrometisch gemessen. Diese Art der chemischen Desinfektion mit Natriumhypochlorit (Chlorbleichlauge) ist zwar im Bereich kleinerer Schwimmbecken erprobt und bewährt, hingegen in Brauchwasser-Verteilungsleitungen äußerst gefährlich, weil eine Vermischung mit Säuren zur sofortigen Bildung von Chlorgas führt. Daher lassen die bestehenden Vorschriften zur Trinkwasserversorgung nur einen geringen Chlorgehalt im Trinkwasser zum Schutz der Verbraucher zu. Und schließlich ist seine Anwendung in einer Brauchwasser-Verteilungsleitung wegen der damit beträchtlich gesteigerten Korrosionsgefahr und der Leckagen als Folgeschäden sowie eventuell damit verbundener allergischer Hautreaktionen aufgrund von gelösten Kupfer-Nickelionen nicht zu verantworten.

Nach der DE 38 40 516 C3 ist eine Anlage zur Erwärmung von Brauchwasser und zum Abtöten von Legionellen bekannt geworden. Diese Anlage besteht aus zwei von einander räumlich getrennten Kreisläufen. In einem Kreislauf wird das entnommene Trinkwasser erwärmt und auf eine der nachgeschalteten thermischen Behandlung erforderliche Temperatur gebracht. Bei Zapfruhe, d. h. wenn kein Brauchwasser aus der Anlage entnommen wird, ist ein geschlossener Kreislauf vorhanden, in dem Trinkwasser auf Reaktionstemperatur erwärmt und anschließend in einem Speicher auf dieser Reaktionstemperatur gehalten wird. Über eine Förderpumpe wird über den Wärmetauscher zur Aufheizung des Trinkwassers und dem dem Wärmetauscher nachgeschalteten Speicher eine Fließgeschwindigkeit des zu behandelnden Wassers gesichert. Hierdurch ist es sichergestellt, daß Legionellen, die in geringem Maße in dem aus der Trinkwasserleitung entnommenen Wasser entfalten sind, sich zwar vermehren aber anschließend abgetötet werden. Im Falle der Entnahme wird aus diesem Erwärmungs- und Behandlungskreislauf eine der Entnahmemenge entsprechende Wassermenge über einen diesem Kreislauf nachgeschalteten Rückkühler zugeführt. Das den Nachkühler durchströmende, behandelte Trinkwasser wird dann Zapfstellen zugeleitet. Vor den Zapfstellen ist ein Nacherwärmer vorgesehen, mit dem das Brauchwasser im Entnahmekreislauf bei schwankenden Entnahmemengen auf die erforderliche Entnahmetemperatur nachgeheizt werden kann.

Zusätzlich zu der Einrichtung zur thermischen Desinfektion sind noch Maßnahmen vorgesehen, durch die eine Chlorierung des Brauchwassers möglich wird. Damit soll eine Rekontaminierung des Trinkwasser aufgrund der räumlichen Trennung des Brauchwassererwärmungskreislaufes und des Brauchwasserverteilungskreislaufes ausgeschlossen werden.

Dieser Anlage haftet der Nachteil an, daß der Anlagenteil sehr groß ist und bei Zapfruhe eine große Gefahr der Rekontaminierung des thermisch behandelten Trinkwassers.in der Erwärmungs- und Reaktionsstufe eintritt. Außerdem sind die Anlagenteile, die mit dem auf die Reaktionstemperatur erwärmten Trinkwasser beaufschlagt sind, sehr störanfällig. Durch die Erwärmung des Trinkwassers auf über 70° C wird das Wasser entkalkt. Dies führt zur Kalkabsonderung, die sich an den Innenwandungen der Anlagenteile absetzen, wodurch auch ein Nährboden für die Legionellenvermehrung entsteht. Die Standzeit für die Anlagenteile reduzieren sich hierdurch erheblich.

In der DE 44 03 631 A1 wird eine Anlage zum Erwärmen von Trinkwasser und zur Vermeidung der Gefahr des Aufwuchses von Legionellen offenbart, die aus einer heizungsseitig angeordneten Aufheizeinheit für das zu erwärmende Trinkwasser besteht, der ein Wirbelstromspeicher für das erwärmte Trinkwasser nachgeordnet ist. Das der Aufheizeinheit, die aus einem Wärmeübertrager besteht, zugeführte Trinkwasser aus dem öffentlichen Versorgungsnetz dient gleichzeitig zur Rückkühlung des auf eine Abtötungstemperatur von 70° C erwärmten Trinkwassers auf eine Verbrauchertemperatur von 60° C, nachdem dieses den Wirbelstromspeicher durchflossen hat. Der Wirbelstromspeicher dient gleichzeitig der Pufferung bei Warmwasserentnahme in Spitzenzeiten und sichert darüber hinaus, daß das auf 70° C erwärmte Trinkwasser über eine definierte Reaktionszeit zur Abtötung der Legionellen dort verweilt.

Da die Kühlleistung des Wärmeaustauschers in der Entnahmeeinheit von der momentanen Entnahmemenge des erwärmten Trinkwassers in der Hausanlage abhängig ist, ist neben der trinkwasserseitig angeordneten Entnahmeeinheit weiterhin trinkwasserseitig eine Zirkulationseinheit vorgesehen, die über einen Wärmeaustauscher das in der Zirkulationsleitung rückfließende Wasser einerseits zur Abkühlung des auf Reaktionstemperatur von 70° C erwärmten Wassers dient, sofern dieses nicht schon auf die Verbrauchertemperatur von 60° C abgekühlt worden ist, und andererseits das aus dem Verbraucherkreis rückfließende Wasser der Vorlaufleitung des Wärmeaustauschers in der Aufheizeinheit zuführt.

Diesem Gegenstand haftet der Nachteil an, dass erwärmtes (auf 70° C) Trinkwasser in einem Wirbelstromspeicher vor der Zuführung des wärmebehandelten Trinkwassers in der Verbrauchereinheit zwischengelagert wird. Gleichzeitig befinden sich die Baueinheiten zur Temperaturregelung nach der Erwärmung des Trinkwassers auf 70°C ausnahmslos auf der Trinkwasserseite. Hierdurch ist eine Wiederbelebung der Legionellenflora begünstigt.

Nach der DE 198 18 630 A1 ist eine Einrichtung zur Warmwassererzeugung bei gleichzeitiger thermischer Desinfektion des zugeführten und erwärmten Trinkwassers bekannt. Die Einrichtung besteht aus einem das aus dem öffentlichen Netz entnommene Trinkwasser erwärmenden Durchlauferhitzer und einem nachgeordneten, das auf 70° C erwärmte Trinkwasser abkühlenden Wärmeaustauscher, der primärseitig durch Trinkwasser beaufschlagt wird, das anschließend dem Durchlauferhitzer zugeführt wird. Parallel zu der Durchflußrichtung des zu erwärmenden Wassers im Durchlauferhitzer liegt eine Beipaßleitung, mittels derer aus einer Zirkulationsleitung abgekühltes behandeltes Trinkwasser dem Vorlauf eines Versorgungssystems mit Warmwasser für Gebäudeeinheiten zwecks Abkühlung des auf 70° C erwärmten Trinkwassers zugeführt wird.

Auch dieser Einrichtung haftet der Mangel an, dass der Trinkwasserzufluß zum Durchlauferhitzer mittels Trinkwasser aus dem öffentlichen Versorgungsnetz vorgenommen wird, wobei dieses Trinkwasser sich erwärmt und die Legionellenwachstumsgefahr sich vergrößert. Gleichzeitig wird zur Abkühlung aus der Zirkulationsleitung rückströmendes aufbereitetes Trinkwasser benutzt. Damit wird dem wärmebehandelten Trinkwasser zur Legionellenabtötung wieder eine Zirkulationsrate von abgekühltem Trinkwasser aus der Zirkulationsleitung zugeführt und das behandelte Trinkwasser rekonterminiert.

Auch dieser Anlage haftet deshalb der Nachteil an, dass mit dieser keine vollständige thermische Desinfektion des Trinkwassers möglich ist.

Nach der DE 197 45 200 A1 ist ein Verfahren und eine Vorrichtung zur Abtötung von Krankheitserregern in Wasserversorgungsanlagen bekannt. Hiernach wird das aus dem öffentlichen Netz entnommene Trinkwasser nach Durchfluß durch einen Wärmeaustauscher als vorgewärmtes Trinkwasser einer Heizung zugeführt. Das auf 70° Aufgeheizte Wasser wird dann in dem vorgenannten Wärmeaustauscher, der primärseitig kaltwasserbeaufschlagt ist, auf 60° C herabgekühlt und anschließend einem Vorratsbehälter zugeführt. Aus diesem erfolgt dann die Versorgung der Verbraucher im Warmwasserkreislauf. Ober eine Zirkulationsleitung wird ständig Warmwasser aus dem Verbrauchernetz wieder rückgeführt und in den Vorratbehälter eingespeist.

Auch diese Anlage hat den Mangel, dass eine vollständige thermische Desinfektion nicht möglich ist. Zur Abkühlung des zuvor erwärmten und thermisch behandelten Trinkwassers wird in dem Vorratbehälter über eine Zirkulationsleitung Trinkwasser, das sich in dieser Ringleitung abgekühlt hat, zugeführt. In der Zeit des Durchfließens des vormals erwärmten und desinfizierten Trinkwassers durch die Zirkulationsleitung tritt ein erneutes Legionellenwachstum ein und mit dieser Zirkulationsrate an abgekühltem Trinkwasser wird das thermisch behandelte Trinkwasser, das dem Vorratsbehälter zugeflossen ist, wieder konterminiert.

In der WO 02/11773 A1 wird ein Verfahren an einer Vorrichtung zur Bereitstellung von thermisch desinfiziertem Trinkwasser offenbart. Die Einrichtung besteht aus einem heizungsseitig eingebundenen Wärmeaustauscher, mit dem Trinkwasser auf die erforderliche Abtötungstemperatur von mindestens 70° C erwärmt wird und aus einer trinkwasserbeaufschlagten Abkühlungseinheit mit einem Doppelströmwärmeaustauscher, mit dem das auf Abtötungstemperatur aufgewärmte Trinkwasser auf 60° C zurückgekühlt werden soll. Mit dieser Einrichtung ist eine vollständige thermische Desinfektion des Trinkwassers möglich, allerdings ist zur Rückkühlung des Trinkwarmwassers ein Wärmeaustauscher vorgesehen, der primärseitig vom Trinkwasser durchströmt ist. Nachteilig wirken sich die trinkwasserseitig eintretenden hohen Druckverluste dieser Einrichtung, da hier 3 Wärmeaustauschflächen vorhanden sind, die vom Trinkwasser durchströmt werden müssen, und der zusätzlich trinkwasserseitig erforderliche Regelaufwand aus. Außerdem ist keine wirkungsvolle Regelung der Netzvorlauftemperatur möglich.

Bei der in der WO 95/29127 offenbarten Lösung handelt es sich um eine Einrichtung zur Erwärmung von Trinkwasser, das gleichzeitig einer thermischen Desinfektion unterzogen wird. Hierzu wird das aus dem öffentlichen Netz entnommene Trinkwasser über einen Wärmeaustauscher einem das Wasser auf 70°C erwämenden Wärmeaustauscher zugeführt, das dann anschließend in einem Pufferspeicher eingelagert wird. Aus diesem wird es dann den Verbrauchern zugeführt, nachdem es in einem zweiten Wärmeaustauscher, der primärseitig trinkwasserbeaufschlagt ist, abgekühlt wurde. Zur Absicherung der Abkühlung des zuvor erwärmten Trinkwasserstromes auf 60° C ist eine Zumischung aus dem Zirkulationskreis der Wasserversorgungsanlage vorgesehen.

Dieser Anlage-haftet der Nachteil an, daß keine vollständige thermische Desinfektion abgesichert werden kann, da zur Abkühlung rekonterminiertes Trinkwasser über die Zirkulationsleitung dem Warmwasserstrom zugemischt wird. Außerdem treten hohe Druckverluste auf, da das Trinkwasser 4 Wärmeübertragerflächen durchströmen muß.

Ziel der Erfindung ist es, einerseits erwärmtes Trinkwasser, das frei von Legionellen ist, dem Verbraucher zur Verfügung zu stellen, und andererseits die Bereitstellung von keimfreien erwärmten Trinkwasser mit einem wirtschaftlich vertretbaren Aufwand zu verwirklichen.

Die Aufgabe der Erfindung besteht darin, eine Einrichtung zur Erwärmung von Trinkwasser mit einer anschließenden Temperaturbehandlungsstufe und mit einer Wärmerückgewinnung der für das Abtöten der Legionellen erforderlichen Erhitzung des Trinkwassers, zu entwickeln, die mit Wärmeenergie aus einem Wärmeenergiespeicher versorgt wird.

Diese Aufgabe wird erfindungsgemäß durch die in den unabhängigen Ansprüchen offenbarte technische Lehre gelöst.

Die Erfindung soll nachfolgend an einem Ausführungsbeispiel näher erläutert werden. In den zugehörigen Zeichnungen zeigen:

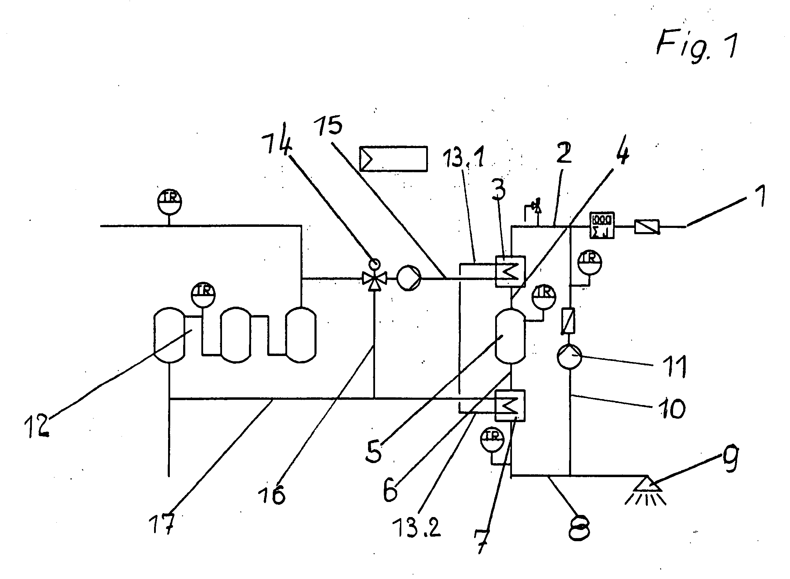

- Fig. 1: ein Schaltungsschema einer Einrichtung zur Erwärmung und thermischen Behandlung von Trinkwasser mit einer thermostatischen Steuerung der Vorlauftemperatur des Heizmediums im Vorlauf des mit einer Wärmeenergiespeicheranlage verbundenen Primärkreislaufes des der Erwärmung des Trinkwassers auf Reaktionstemperatur dienenden Wärmetauschers und zur Rückkühlung des auf Reaktionstemperatur erwärmten Trinkwassers,

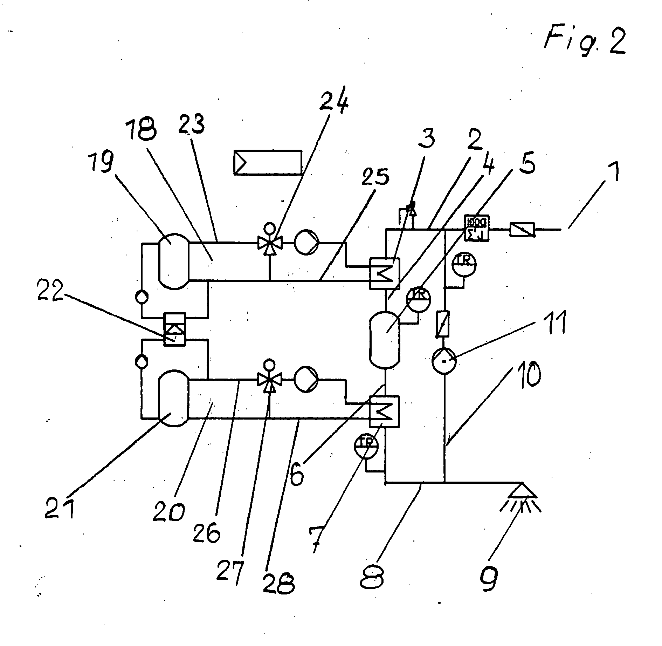

- Fig. 2: ein Schaltungsschema einer Einrichtung zur Erwärmung und thermischen Behandlung von Trinkwasser auf Reaktionstemperatur über einen mit einem Energiespeicher, verbundenen Wärmetauscher und mit einem Abkühlspeicher verbundenen, der Abkühlung des erwärmten Trinkwassers dienenden Wärmetauscher, wobei die Wärmetauscher mit dem jeweiligen Energiespeicher bzw. Abkühlspeicher über Kreisläufe mit einer Wärmepumpe verbunden sind,
- Fig. 3: ein Schaltungsschema einer Einrichtung nach Fig. 1 mit einer alternativen Regelung des primärseitigen Vorlaufes zum der Erwärmung des Trinkwassers dienenden Wärmetauscher,
- Fig. 4: ein Schaltungsschema einer Einrichtung nach Fig. 1 mit einer weiteren alternativen Regelung der Temperatur im Vorlauf zum der Abkühlung des erwärmten Trinkwassers dienenden Wärmetauscher,
- Fig. 5: ein Schaltungsschema einer Einrichtung nach Fig. 1 mit einer weiteren alternativen Regelung der Temperatur im Vorlauf zum der Abkühlung des erwärmten Trinkwassers dienenden Wärmetauscher.

Nach der Prinziplösung der Erfindung wird Trinkwasser, das aus einem öffentlichen Netz an einem Trinkwasseranschluß 1 entnommen wird, über eine Zuführungsleitung 2 einem Wärmetauscher 3 zugeführt, in dem das entnommene Trinkwasser auf eine Reaktionstemperatur von mindestens 70° C erwärmt wird. Ober eine Verbindungsleitung 4 wird dieses auf die Reaktionstemperatur aufgeheizte Trinkwasser einem Reaktionsspeicher 5 zugeführt. In diesem wird das auf die Reaktionstemperatur aufgeheizte Trinkwasser über die bei 70° C notwendige Reaktionszeit gespeichert. Über eine kurze Verbindungsleitung 6 wird dieses thermisch desinfizierte Trinkwasser einem der Abkühlung dienenden Wärmetauscher 7 zugeführt. Das abgekühlte und desinfizierte Trinkwasser wird dann mit einer Vorlauftemperatur von ca. 55° C über eine Speiseleitung 8 an eine Duschanlage 9 abgegeben.

Wegen der diskontinuierlichen Entnahme von Brauchwasser in der Duschanlage 9 ist eine Zirkulationsleitung 10 mit einer Förderpumpe 11 vorgesehen. Ober diese Zirkulationsleitung 10 wird die nicht benötigte Menge von zuvor desinfiziertem Trinkwasser in die Zuführungsleitung 2 nach dem Kaltwasseranschluß 1 eingespeist. Dabei wird das zuvor aufgeheizte aber nicht aus dem Kreislauf, für Duschzwecke entnommene Trinkwasser erneut auf die erforderliche Reaktionstemperatur nacherwärmt. Diese Wärmerückgewinnung führt nicht zu einer Rekontamination des über die Zirkulationsleitung 10 geführten, nicht verbrauchten, erwärmten Trinkwassers, da das Gemisch aus entnommenem Trinkwasser und rückgeführtem, aufbereitetem Trinkwasser dem Wärmetauscher 3 zugeführt wird und hier wieder auf die Reaktionstemperatur von 70° C erwärmt wird. Dieses auf die Reaktionstemperatur von 70° C erwärmte Trinkwasser erfährt durch die Erwärmung während des Zirkulationskreislaufes eine thermische Entkalkung. Deshalb ist nach einem weiteren alternativen Ausgestaltungsmerkmal der Erfindung nach der thermischen Entkalkung noch ein mechanischer Kalkabscheider nachgeordnet. Dieser ist alternativ mit dem Reaktionsspeicher zu einer Baueinheit zusammengefaßt. Durch die erfindungsgemäße Trinkwasserführung, die bei Entnahmestillstand eine vollständige Umwälzung ist, wird verhindert, daß sich eine Rekontamination einstellt.

Die erfindungsgemäß ausgebildete Einrichtung, zur Erwärmung und thermischen Behandlung von Trinkwasser ist Bestandteil einer wärmetechnischen Anlage zur Bereitstellung der erforderlichen Energie zur Erwärmung und Abkühlung des Trinkwassers über die Wärmetauscher 3; 7, wodurch eine Wirtschaftlichkeit für das Bereitstellen von von Legionellen unbelastetem, erwärmtem Trinkwasser möglich ist.

Primärseitig wird der Wärmetauscher 3 aus einem Wärmeenergiespeicher 12 einer nicht dargestellten Wärmeerzeugungsablage gespeist. Das im Wärmetauscher 3 abgekühlte Wärmeübertragungsmedium wird über eine primärseitige Rücklauflaufleitung 13.1 des Wärmetauschers 3 der primärseitigen Vorlaufleitung 13.2 des der Abkühlung dienenden Wärmetauschers 7 zugeführt. Zur Temperatursteuerung des Wärmetauschers 3 ist ein Dreiwegeventil 14 in einer Voraufleitung 15 zum Wärmetauscher 3 vorgesehen, das durch die in der Speisleitung 8 gemessene, auf Verbrauchertemperatur abgekühlte Trinkwasser gesteuert wird. Die Regelung der Vorlauftemperatur an der Primärseite des Wärmetauschers 3 erfolgt über ein temperaturgesteuertes Dreiwegeventil 14 durch Beimischung einer Rate des Wärmeübertragungsmediums aus dem sekundärseitigen Rücklauf 17 des der Kühlung des erwärmten Trinkwassers dienenden Wärmetauschers 7.

Nach einer Variante zur wirtschaftlichen Energiebereitstellung ist vorgesehen, daß sekundärseitig der der Trinkwassererwärmung dienende Wärmetauscher 3 in einen Wärmeversorgungskreislauf 18 mit einem integrierten Wärmeenergiespeicher 19 und dem der Abkühlung des zuvor erwärmten Trinkwassers dienenden Wärmetauscher 7 in einen Kühlmittelkreislauf 20 mit einem integrierten Kühlmittelspeicher 21 eingebunden ist und zwischen dem Wärmeversorgungskreislauf 18 und dem Kühlmittelkreislauf 19 eine Wärmepumpe 22 vorgesehen ist. Der Wärmeenergiespeicher 19 ist mit einer externen, nicht dargestellten Wärmeversorgungsanlage und der Kühlmittelspeicher 21 ist mit einer externen, nicht dargestellten Kälteanlage bzw. mit einem Kaltwasseranschluß verbunden. Zur Regelung der Temperatur im Vorlauf 23 ist ein Dreiwegeventil 24 im Wärmeversorgungskreislauf 19 vorgesehen. Diese wird durch Beimischung aus dem sekundärseitigen Rücklauf 25 des Wärmetauschers 3 in den Vorlauf 23 geregelt. Die Temperatur im Vorlauf 26 des Kühlmittelkreislaufes 20 wird analog über ein Dreiwegeventil 27 durch Beimischung aus dem sekundärseitigen Rücklauf 28 des Wärmetauschers 7 geregelt.

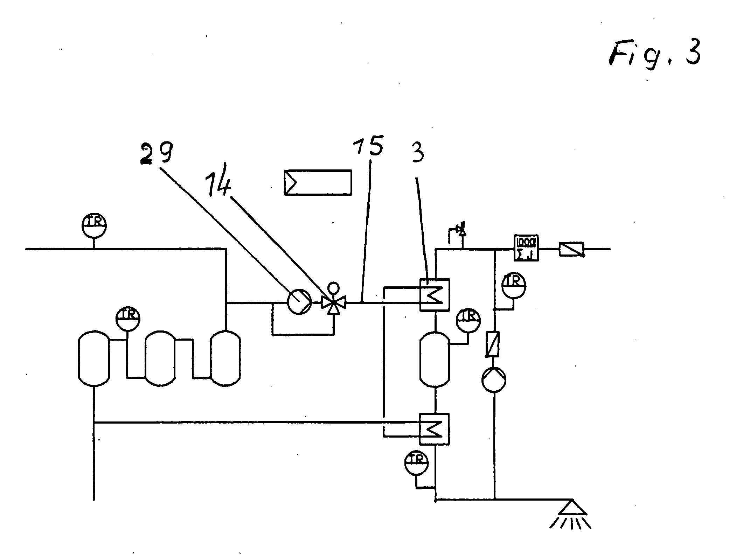

Zur Leistungsregelung sind in den Fig. 3 bis 4 Regelungsvarianten zur wirtschaftlichen Steuerung der Einrichtung zur Erwärmung und thermischen Behandlung von Trinkwasser zwecks Keimfreiheit dargestellt.

In Fig. 3 ist eine Leistungsregelung des Wärmetauschers 3 durch eine Volumensteuerung im Vorlauf 15 zum der Erwärmung des Trinkwassers dienenden Wärmetauschers 3 dargestellt.

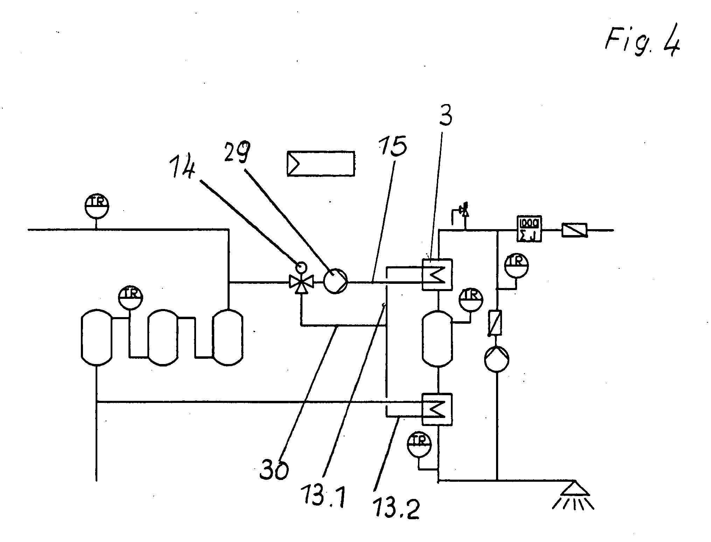

In Fig. 4 wird eine Leistungsregelung des Wärmetauschers 3 durch eine Beimischung aus dem primärseitigen Rücklauf 13.1 des Wärmetauschers 3 in den primärseitigen Vorlauf 15 des Wärmetauschers 3 bewirkt.

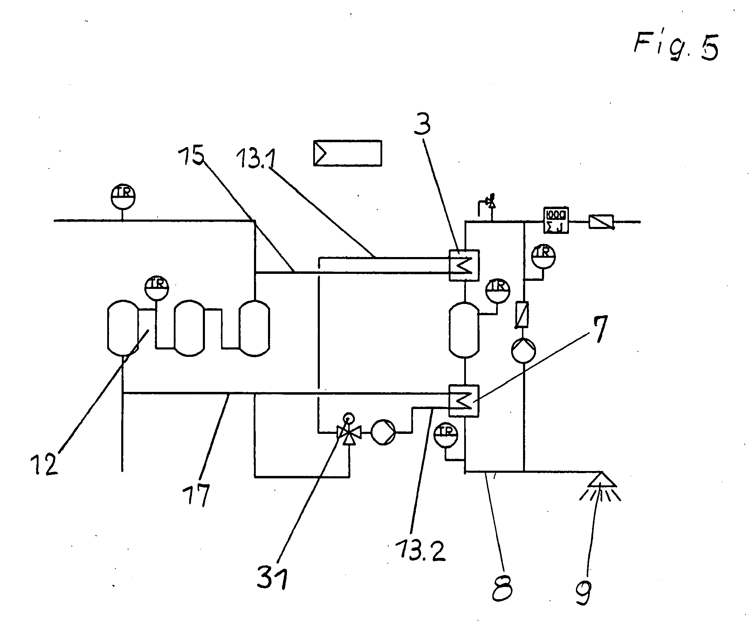

In Fig. 5 ist eine Leistungsregelung des der Abkühlung des erwärmten Trinkwassers dienenden Wärmetauschers 7 dargestellt. Die Temperatur im primärseitigen Vorlauf 13.2 zum Wärmetauscher 7 wird durch Beimischung aus dem primärseitigen Rücklauf 17 des Wärmetauschers 7 temperaturabhängig von der Temperatur in der Speiseleitung 8 zur Duschanlage 9 geregelt. Diese Beimischregelung erfolgt über ein Dreiwegeventil 31 in dem primärseitigen Vorlauf 13.2 zum Wärmetauscher 7.

Die Vorteile der Erfindung liegen einerseits in der Möglichkeit, eine Einrichtung zur Erwärmung und thermischen Be-handlung von Trinkwasser, insbesondere für Duschanlagen, wirtschaftlich zu betreiben und andererseits unter Abwendung einer Verfahrens zur Bereitstellung von erwärmtem, legionellenfreien Trinkwasser auch über die Dauer eines Entnahmestillstandes in einer Anlage zur Erwärmung und thermischen Behandlung, einschließlich der alternativen Entkalkung des zuvor thermisch behandelten Trinkwassers zu garantieren.

## Patentansprüche

1. Einrichtung zur Erwärmung und zur thermischen Behandlung von Trinkwasser aus öffentlichen Versorgungsnetzen in einer Wärmeversorgungsanlage, bestehend aus einer Wärmeversorgungsanlage gespeisten, der Trinkwasserserwärmung dienenden und heizungsseitig angeordneten Wärmeübertrager zur Erwärmung des sowohl aus dem öffentlichen Netz entnommenen Trinkwassers als auch das über eine Zirkulationsleitung aus der Gebäudeanlage rückfließende nicht verbrauchte Trinkwarmwasser auf eine Abtötungstemperatur für Legionellen, einer Reaktionsstrecke und einem Wärmeübertrager zur anschließenden Abkühlung des Trinkwarmwassers, ***dadurch gekennzeichnet*, daß** der sekundärseitig über eine Vorlaufleitung (2) mit einem Trinkwasseranschluß (1) verbundene, der Erwärmung des Trinkwassers auf eine Reaktionstemperatur dienende Wärmeübertrager (3) über einen Rücklauf (4) sekundärseitig mit einem Reaktionbehälter (5) und dieser mit einem der Abkühlung des Trinkwarmwassers dienenden Wärmeübertrager (7) sekundärseitig über dessen Vorlauf (6) verbunden ist, dessen primärseitiger Vorlauf ( 13.2) mit einem primärseitigen Rücklauf (13.1) des der Erwärmung des Trinkwassers auf 70 ° C dienender Wärmeaustauschers (3) verbunden ist, wobei ein Vorlauf (15) des Wärmeaustauschers (3) und ein Rücklauf (17) des der Abkühlung des Trinkwassers dienender Wärmeaustauschers (7) primärseitig mit der Wärmeversorgungsanlage verbunden sind und eine Zirkulationsleitung (10) sekundärseitig in eine Vorlaufleitung (2) zum Wärmeaustauscher (3) eingebunden ist.

2. Einrichtung nach Anspruch 1, ***dadurch gekennzeichnet*, daß** zur Entkalkung ein Feststoffabscheider vorgesehen ist, der zwischen dem der Erwärmung des Trinkwasser dienenden Wärmeaustauscher (3) und dem der Abkühlung des Trinkwarmwassers dienenden Wärmeaustauscher (7) angeordnet ist.

3. Einrichtung nach Anspruch 1, ***dadurch gekennzeichnet,* daß** der zur Entkalkung vorgesehene Feststoffabscheider als ein Zentrifugalabscheider ausgebildet ist.

4. Einrichtung nach Anspruch 1, ***dadurch gekennzeichnet*, daß** der zur Entkalkung vorgesehene Feststoff-abscheider mit dem Reaktionsbehälter (5) eine Baueinheit bildet.

5. Einrichtung nach Anspruch 1, ***dadurch gekennzeichnet*, daß** zur Sicherung der erforderlichen Vorlauftemperatur für die Erwärmung des Trinkwassers im Wärmeaustauscher (3) auf die erforderliche Reaktionstemperatur primärseitig in der Vorlaufleitung (15) ein Dreiwegeventil (14) und eine drehzahlabhängig geregelte Umwälzpumpe (29) vorgesehen ist, wobei das Dreiwegeventil (14) abhängig von der Verbrauchertemperatur sekundärseitig in der mit dem Rück-lauf verbundenen Speiseleitung (8) des Wärmeaustauschers (7) steuerbar ist.

6. Einrichtung nach Anspruch 1, ***dadurch gekennzeichnet,* daß** heizkreisseitig Wärmespeicher (12) zum Ausgleich von Energiespitzen bei der Warmwasserbereitstellung vorgesehen sind.

7. Verfahren zur Erwärmung und zur thermischen Behandlung von Trinkwasser aus öffentlichen Versorgungsnetzen mit einer Einrichtung nach Anspruch 1, ***dadurch gekennzeichnet,* daß** die Erwärmung und die Abkühlung des Trinkwarmwasser mit zwei Wärmeaustauschflächen vorgenommen wird.

8. Verfahren nach Anspruch 6, ***dadurch gekennzeichnet,* daß** das Trinkwasser in einem heizkreisseitiig angeordneten Wärmeaustauscher (3) auf die erforderliche Abtötungstemperatur erwärmt wird und dieses anschließend in einem gleichfalls heizkreisseitig im gleichen Heizkreis angeordneten Wärmeaustauscher (7) auf eine Bereitstellungstemperatur rückgekühlt wird, wobei primärseitig der Rücklauf (13.1) des Wärmeaustauscher (3) primärseitig mit dem Vorlauf (13.2) verbunden ist.

9. Verfahren nach Anspruch 6 und 7, ***dadurch gekennzeichnet,* daß** die thermische Behandlung des Trinkwassers in den Wärmeaustauschern (3,7) sekundarseitig erfolgt, wobei zwischen Erwärmung und Rückkühlung des behandelten Trinkwassers auf eine definierte Entnahmetemperatur eine Beruhigungsstrecke (5) liegt, in der das Trinkwarmwasser zeitlich verweilt und während dieser Verweildauer bei der erforderlichen Abtötungstemperatur vollständig desinfiziert wird.

10. Verfahren nach Anspruch 8, ***dadurch gekennzeichnet,* daß** erwärmte Trinkwasser, während der zeitlich fixierten Verweildauer thermisch sowohl desinfiziert als auch entkalkt und anschließen auf eine Bereitstellungstemperatur rückgekühlt wird.

11. Verfahren nach Anspruch 6 bis 9, ***dadurch gekennzeichnet,* daß** auf die thermischen Entkalkung eine mechanische Entkalkung folgt.

12. Verfahren nach Anspruch 10, ***dadurch gekennzeichnet,* daß** die Erwärmung und anschließende Abkühlung des Trinkwarmwassers über mit einem Energieversorgungssystem verbundene Wärmeaustauscher (3; 7) vorgenommen wird.

## Claims

1. Apparatus for heating and thermally treating drinking water from public supply networks in a heat supply system, consisting of a heat exchanger, which is fed by a heat supply system, is used for heating drinking water and is arranged on the heating side, for heating both the drinking water taken from the public network and the unconsumed warm drinking water which flows back via a circulation line from the building system to a lethal temperature for legionella, of a reaction zone and of a heat exchanger for subsequently cooling the warm drinking water, **characterised in that** the heat exchanger (3), which is connected on the secondary side via an inflow line (2) to a drinking water connection (1) and is used for heating the drinking water to a reaction temperature, is connected on the secondary side via a return (4) to a reaction vessel (5), and the latter is connected on the secondary side to a heat exchanger (7), which is used for cooling the warm drinking water, via its inflow (6), the primary-side inflow (13.2) of which heat exchanger is connected to a primary-side return (13.1) of the heat exchanger (3) which is used for heating the drinking water to 70°C, with an inflow (15) of the heat exchanger (3) and a return (17) of the heat exchanger (7) which is used for cooling the drinking water being connected on the primary side to the heat supply system and a circulation line (10) being included on the secondary side in an inflow line (2) to the heat exchanger (3).

2. Apparatus according to Claim 1, **characterised in that** a solid separator is provided for decalcifying, which is arranged between the heat exchanger (3) which is used for heating the drinking water and the heat exchanger (7) which is used for cooling the warm drinking water.

3. Apparatus according to Claim 1, **characterised in that** the solid separator provided for decalcifying is configured as a centrifugal separator.

4. Apparatus according to Claim 1, **characterised in that** the solid separator provided for decalcifying forms one component with the reaction vessel (5).

5. Apparatus according to Claim 1, **characterised in that**, in order to ensure the necessary inflow temperature for heating the drinking water in the heat exchanger (3) to the necessary reaction temperature, a three-way valve (14) and a circulation pump (29) which is controlled in a speed-dependent manner are provided in the inflow line (15) on the primary side, with it being possible for the three-way valve (14) to be controlled as a function of the consumer temperature on the secondary side in the feed line (8), which is connected to the return, of the heat exchanger (7).

6. Apparatus according to Claim 1, **characterised in that** thermal reservoirs (12) are provided on the heating circuit side in order to compensate energy peaks when providing warm water.

7. Method for heating and thermally treating drinking water from public networks with an apparatus according to Claim 1, **characterised in that** the heating and the cooling of the warm drinking water is carried out with two heat exchange surfaces.

8. Method according to Claim 6, **characterised in that** the drinking water is heated to the necessary lethal temperature in a heat exchanger (3), which is arranged on the heating circuit side, and is then cooled back to a provision temperature in a heat exchanger (7), which is likewise arranged on the heating circuit side in the same heating circuit, with on the primary side the return (13.1) of the heat exchanger (3) being connected on the primary side to the inflow (13.2).

9. Method according to Claim 6 and 7, **characterised in that** the thermal treatment of the drinking water takes place on the secondary side in the heat exchangers (3, 7), with a rest zone (5) being situated between heating and cooling the treated drinking water back to a defined removal temperature, in which rest zone the warm drinking water dwells in time and is completely disinfected during this dwell time at the necessary lethal temperature.

10. Method according to Claim 8, **characterised in that** heated drinking water is both thermally disinfected and decalcified during the dwell time, which is fixed in time, and is then cooled back to a provision temperature.

11. Method according to Claims 6 to 9, **characterised in that** mechanical decalcifying follows the thermal decalcifying.

12. Method according to Claim 10, **characterised in that** the heating and subsequent cooling of the warm drinking water is carried out by means of heat exchangers (3; 7) which are connected to an energy supply system.

## Revendications

1. Dispositif pour chauffer ou pour le traitement thermique d'eau potable issue de réseaux d'alimentation publics dans une installation d'alimentation d'eau, composé d'un échangeur thermique alimenté à partir d'une installation d'alimentation d'eau, servant à chauffer l'eau et disposé du côté chauffage pour chauffer aussi bien l'eau potable prélevée dans le réseau public que l'eau potable non consommée, s'écoulant en retour via un conduit de circulation à partir de l'installation dans le bâtiment à une température de destruction des légionelles, d'un trajet de réaction et d'un échangeur thermique pour le refroidissement consécutif de l'eau potable, **caractérisé en ce que** l'échangeur thermique (3) relié du côté secondaire via un conduit aller (2) à un branchement d'eau potable (1), servant à chauffer l'eau potable à une température de réaction est relié du côté secondaire via un conduit retour (4) à un réservoir de réaction (5) et ledit échangeur thermique est relié du côté secondaire à un échangeur thermique (7) servant à refroidir l'eau potable, via le conduit aller (6) de ce dernier, dont le conduit aller du côté primaire (13.2) est relié à un conduit retour (13.1) du côté primaire de l'échangeur thermique (3) servant à chauffer l'eau potable à 70°C, un conduit aller (15) de l'échangeur thermique (3) et un conduit retour (17) de l'échangeur thermique (7) servant à refroidir l'eau potable étant reliés du côté primaire à l'installation d'alimentation d'eau et un conduit de circulation (10) étant intégré du côté secondaire dans un conduit aller (2) vers l'échangeur thermique (3).

2. Dispositif selon la revendication 1, **caractérisé en ce que** pour le détartrage, il est prévu un séparateur de matières solides, qui est disposé entre l'échangeur thermique (3) servant à chauffer l'eau potable et l'échangeur thermique (7) servant à refroidir l'eau potable.

3. Dispositif selon la revendication 1, **caractérisé en ce que** le séparateur de matières solides prévu pour le détartrage est conçu sous la forme d'un séparateur centrifuge.

4. Dispositif selon la revendication 1, **caractérisé en ce que** le séparateur de matières solides prévu pour le détartrage forme une unité modulaire avec le réservoir de réaction (5).

5. Dispositif selon la revendication 1, **caractérisé en ce que** pour garantir la température aller nécessaire pour chauffer l'eau potable dans l'échangeur thermique (3) à la température de réaction nécessaire, il est prévu du côté primaire dans le conduit aller (15) une soupape à trois voies (14) et une pompe de circulation (29) réglée en fonction de la vitesse de rotation, la soupape à trois voies (14) étant susceptible d'être pilotée du côté secondaire, en fonction de la température de consommation dans le conduit d'alimentation (8) reliée au conduit retour de l'échangeur thermique (7).

6. Dispositif selon la revendication 1, **caractérisé en ce que** des accumulateurs thermiques (12) sont prévus du côté du circuit de chauffage pour compenser des crêtes d'énergie lors du traitement de l'eau chaude.

7. Procédé pour chauffer et pour le traitement thermique d'eau potable issue de réseaux d'alimentation publics avec un dispositif selon la revendication 1, **caractérisé en ce que** le chauffage et le refroidissement de l'eau potable s'effectuent avec deux surfaces d'échange thermique.

8. Procédé selon la revendication 6, **caractérisé en ce que** l'eau potable est chauffée dans un échangeur thermique (3) disposé du côté du circuit de chauffage à la température de destruction nécessaire et que cette dernière est ensuite de nouveau refroidie dans un échangeur thermique (7) disposé également du côté du circuit de chauffage dans le même circuit de chauffage à une température de mise à disposition, le conduit retour (13.1) de l'échangeur thermique (3) étant relié du côté primaire au conduit aller (13.2).

9. Procédé selon la revendication 6 et 7, **caractérisé en ce que** le traitement thermique de l'eau potable dans les échangeurs thermiques (3, 7) s'effectue du côté primaire, entre le chauffage et le refroidissement consécutif de l'eau potable traitée à une température de soutirage définie étant situé un trajet d'apaisement (5) dans lequel l'eau potable séjourne temporairement et pendant cette durée de séjour elle est totalement désinfectée à la température de destruction nécessaire.

10. Procédé selon la revendication 8, **caractérisé en ce que** pendant la durée de séjour fixée dans le temps, l'eau potable chauffée est aussi bien désinfectée que détartrée, puis refroidie en retour à une température de mise à disposition.

11. Procédé selon la revendication 6 à 9, **caractérisé en ce qu'**un détartrage mécanique fait suite au détartrage thermique.

12. Procédé selon la revendication 10, **caractérisé en ce que** le chauffage et le refroidissement consécutif de l'eau potable s'effectuent au moyen d'un échangeur thermique (3, 7) relié à un système d'alimentation en énergie.
